# EUROPEAN PATENT SPECIFICATION

(11) **EP 2 784 358 B1**
(45) Date of publication and mention of the grant of the patent: **06.01.2016**
(21) Application number: 14162157.3
(22) Date of filing: 28.03.2014
(51) Int. Cl.: F16H 63/06, F16H 9/18, F16H 55/56

(54) **V-belt continuously variable transmission**
Stufenlos einstellbares Keilriemengetriebe
Transmission variable continue à courroie en V

(30) Priority: 29.03.2013 JP 2013072357
(43) Date of publication of application: 01.10.2014
(73) Proprietor: Musashi Seimitsu Industry Co., Ltd., Aichi (JP); HONDA MOTOR CO., LTD., Tokyo (JP)
(72) Inventor: Shigihara, Akira, Kumamoto (JP); Okamoto, Teruhisa, Toyohashi-Shi, Aichi (JP); Atsumi, Takashi, Toyohashi-Shi, Aichi (JP); Nishimura, Manabu, Toyohashi-Shi, Aichi (JP); Sato, Yuri, Toyohashi-Shi, Aichi (JP); Yamamoto, Toshiaki, Toyohashi-Shi, Aichi (JP); Morita, Go, Wako-Shi, Saitama (JP); Kakemizu, Kenichiro, Wako-Shi, Saitama (JP); Asumi, Michio, Wako-Shi, Saitama (JP); Ishikawa, Hideo, Wako-Shi, Saitama (JP)
(74) Representative: Intès, Didier Gérard André

(56) References cited:
- EP-A1- 2 187 095
- WO-A1-2009/031669
- WO-A1-2013/015243

## Description

The present invention relates to a V-belt continuously variable transmission provided with an actuator for moving a movable sheave member.

Heretofore, there have been proposed various constructions for transmissions that transmit output rotations of an engine to a drive wheel after appropriately changing the number of the output rotations. Particularly, recent years have seen widespread use of V-belt continuously variable transmissions that include, as their fundamental components, a drive pulley, a driven pulley and a V-belt. The drive pulley and the driven pulley each comprise a fixed sheave member and a movable sheave member. For example, European Patent Application Publication EP 2 187 095 A1 discloses a transmission according to the preamble of appended claim 1. Japanese Patent Application Laid-Open Publication No. 2009-79759 (hereinafter referred to as "the relevant prior patent literature"), for example, discloses a transmission that moves the movable sheave member via an actuator. The actuator disclosed in the relevant prior patent literature pivotally moves a fork member by a screw shaft of a ball screw to thereby move the movable sheave member.

Although the ball screw has a high screw efficiency, it is expensive because of its required precision. Further, because the screw grooves and the balls of the ball screw are in point contact, the ball screw is susceptible to an impact or has low impact resistance and durability. If the screw shaft is to be increased in diameter in order to secure desired durability, there arises a need to secure a greater installation space.

Because of growing needs for reduction in cost and size of transmissions and for the foregoing reasons, there has recently been a great demand for a more sophisticated actuator that can appropriately take the place of the ball screw.

In view of the foregoing prior art problems, it is an object of the present invention to provide an improved V-belt continuously variable transmission which is provided with an actuator taking the place of a ball screw and thus can be reduced in cost and size.

In order to accomplish the above-mentioned object, the present invention provides an improved V-belt continuously variable transmission which is defined in appended claim 1 and includes a fixed sheave member fixedly mounted on a pulley shaft, a movable sheave member axially movably mounted on the pulley shaft, a V-belt wound between the fixed and movable sheave members, and an actuator for axially moving the movable sheave member along the pulley shaft toward or away from the fixed sheave member, characterized in that the actuator comprises: a motor as a drive source; a nut member having a female screw formed thereon and rotationally drivable by the motor; an output rod having a male screw formed thereon and meshing with the female screw of the nut member, the output rod axially moving in response to rotation of the nut member to thereby axially move the movable sheave member connected to one end portion thereof; an actuator case accommodating and rotatably supporting the nut member and a part of the output rod, the one end portion of the output rod extending through a wall portion of the actuator case outwardly of the actuator case; a first bearing disposed on the actuator case or the nut member for supporting the one end portion of the output rod; and a second bearing disposed on the actuator case or the nut member for supporting another end portion of the output rod, opposite from the one end portion, with the male screw disposed between the one end portion and the other end portion.

Namely, according to the present invention, a feed mechanism between the output rod and the nut member of the actuator employs ordinary screws. The ordinary screws employed in the feed mechanism of the present invention may be any of various types of ordinary screws other than ball screws, such as trapezoidal screws, triangular screws and square screws.
In the ball screws, balls and screw grooves are in point contact with each other. However, in the ordinary screws, male and female screws are in surface contact with each other, so that high load or impact resistance and durability can be achieved and screw shafts can be reduced in diameter. Additionally, because the ordinary screws are less costly than the ball screws, the V-belt continuously variable transmission of the present invention can be reduced in cost and size.

However, in the case where the feed screw of the V-belt continuously variable transmission of the present invention employs the ordinary screws, the output rod tends to incline relative to the axis of the nut member particularly because of the structural reason that no balls as provided in the ball screw are disposed between the male screw and the female screw. Therefore, if external force is applied to the output rod inclining relative to the axis of the nut member, the output rod would radially incline relative to the axis of the nut member and thus there would occur unwanted tight, inclined pressing, and possibly clinging or locking, between the male screw and the female screw, so that operation of the output rod would become unsmooth.

To avoid such inconveniences, the present invention employs the ordinary screw in the feed mechanism but also supports the output rod via the first and second bearings. As a result, the present invention can not only prevent the output rod from inclining relative to the axis of the nut member but also prevent unwanted tight, inclined pressing, and possibly clinging or locking, between the male screw and the female screw, thereby permitting smooth operation of the output rod.

Preferably, the first and second bearings and the output rod are disposed with radial gaps formed therebetween, and the radial gaps are set such that a backlash and top clearances are secured between the female screw and the male screw even when the output rod inclines radially into contact with at least one of the first and second bearings. With such radial gaps formed such that top clearances are secured between the female screw and the male screw even when the output rod inclines radially into contact with at least one of the first and second bearings, the present invention can even more reliably prevent unwanted, tight, inclined pressing (locking) between the male screw and the female screw.

Preferably, the output rod is designed such that the male screw is smaller in outer diameter than the one end portion of the output rod. Normally, in order to move the movable sheave member via a small motor, a reduction gear group is disposed between the nut member and the motor. In such a case, the reduction gear group can be designed compactly by reducing the outer diameter of the male screw, so that the overall size of the actuator can be reduced and thus the V-belt continuously variable transmission of the present invention can be even further reduced in size. Further, because the one end portion of the output rod is greater in outer diameter than the male screw, rigidity with which the output rod is supported via the first bearing can be increased.

Preferably, the output rod is designed such that its other end portion is smaller in diameter than the male screw. Thus, the actuator can be readily assembled by screwing the output rod into the nut member from the other end portion, so that assemblability and maintainability of the actuator can be significantly enhanced.

Preferably, the first bearing is disposed on the actuator case, and the second bearing is disposed on the nut member. In the case where the second bearing is disposed on the nut member, the output rod can be reduced in length as compared to a case where the second bearing is disposed on the actuator case. Additionally, the actuator case can be reduced in size in this manner, so that the actuator can be reduced in overall size. Further, because the one end portion of the output rod is subjected to external force, it is desirable that the first bearing be disposed near the one end portion of the output rod. In the present invention, the first bearing is disposed on the actuator case rather than on the nut member, so that the first bearing can be disposed near the one end portion of the output rod and thus the rigidity with which the output rod is supported can be increased.

Preferably, the first and second bearings are slide bearings. Because the slide bearings have a great load bearing capability and are less costly, it is possible to reduce the necessary cost of the V-belt continuously variable transmission.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a sectional view showing an embodiment of a V-belt continuously variable transmission of the present invention;
Fig. 2 is an enlarged fragmentary view of an actuator shown in Fig. 1;
Fig. 3 is an enlarged fragmentary view of a section indicated at "3" in Fig. 2;
Fig. 4 is a sectional view showing behavior of the embodiment of the V-belt continuously variable transmission of the present invention;
Figs. 5A to 5D are views explanatory of first and second bearings, of which Figs. 5A and 5C are explanatory of a known example for comparison and Figs. 5B and 5D are explanatory of the embodiment of the present invention.

An embodiment of a V-belt continuously variable transmission 10 of the present invention is particularly suited for application to scooter-type vehicles, although it may also be applied to other two-wheeled vehicles, three-wheeled vehicles and four-wheeled vehicles.

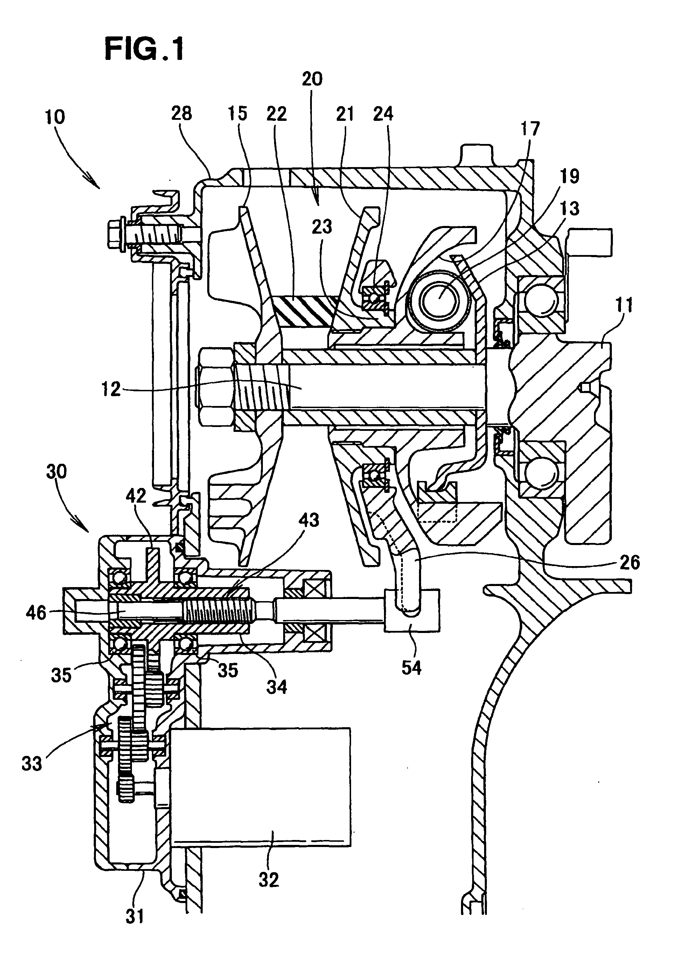

As shown in Fig. 1, the V-belt continuously variable transmission 10 includes a pulley shaft 12 formed integrally at one end of a crankshaft 11, a drive pulley 20 supported or mounted on the pulley shaft 12, a not-shown driven pulley, and a V-belt 22 wound on and extending between the drive pulley 20 and the driven pulley. The drive pulley 20 includes a fixed sheave member 15 fixedly mounted on the pulley shaft 12 and a movable sheave member 21 mounted on the pulley shaft 12 in opposed relation to the fixed sheave member 15 and axially movable relative to the fixed sheave member 15, and the V-belt 22 is wound between the fixed and movable sheave members 15 and 21.

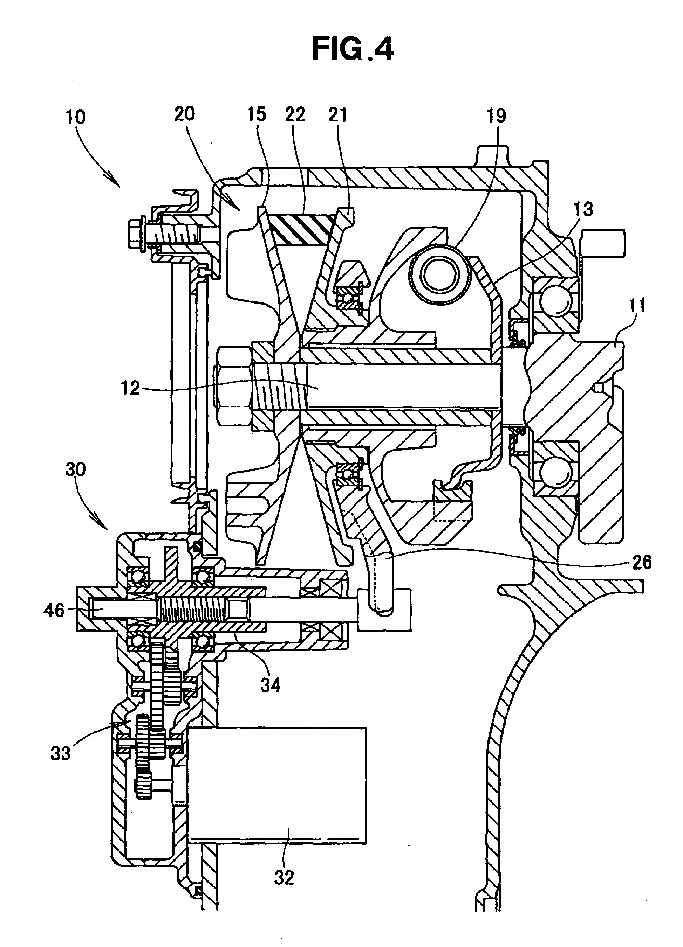

A ramp plate 13 is fixedly mounted on the pulley shaft 12 behind the movable sheave member 21. A plurality of centrifugal weights 19 are retained between the movable sheave member 21 and the ramp plate 13. As the pulley shaft 12 rotates and centrifugal force corresponding to a rotating speed of the pulley shaft 12 acts on the centrifugal weights 19, the centrifugal weights 19 move the movable sheave member 21 toward the fixed sheave member 15 while slidingly moving radially outward along a cam surface 17 of the movable sheave member 21 (see Fig. 4). As a consequence, a distance between the fixed sheave member 15 and the movable sheave member 21 decreases, so that a winding diameter of the V-belt 22 increases.

Further, of the movable sheave member 21, a sliding surface along which the V-belt 22 slides and the cam surface 17 are constructed of separate component parts, and an arm 26 is connected, via a bearing 24, to a boss section 23 located between the belt-sliding surface and the cam surface 17. To the distal end of the arm 26 is connected an output rod 46 of an actuator 30 that moves the movable sheave member 21 in conjunction with the centrifugal weights 19.

The actuator 30 includes a motor 32 as its drive source, a reduction gear group 33 for reducing the number of output rotations of the motor 32, and a nut member 34 rotationally driven by the motor 32 via the reduction gear group 33.

The reduction gear group 33 comprises, for example, six gears, of which the final-stage gear 42 is formed integrally on the nut member 34. The nut member 34 is rotatably supported within and by an actuator case 31 via a pair of ball bearings 35 axially opposed to each other with the final-stage gear 42 interposed therebetween. Thus, force received by the gear 42 can be effectively transmitted to the actuator case 31 via the ball bearings 35.

In the illustrated embodiment, the actuator case 31 having the nut member 34 etc. accommodated therein is provided separately from (i.e., not integrally with) a transmission case 28, and thus, in this case, what supports the nut member 34 is the actuator case 31. Alternatively, however, the actuator case 31 may be provided integrally with the transmission case 28; in this case, what supports the nut member 34 is the transmission case 28.

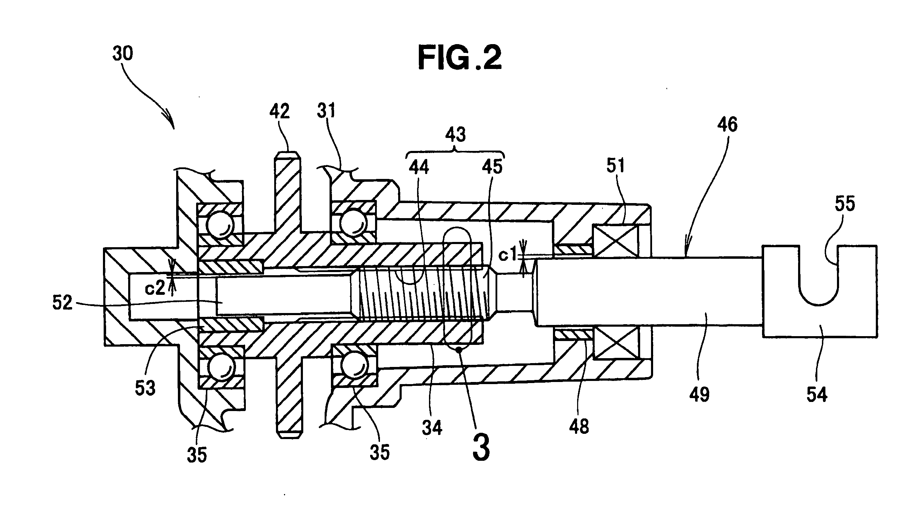

As shown in Fig. 2, the actuator 30 includes the output rod 46 having a trapezoidal male screw (screw thread) 45 meshing with a trapezoidal female screw (screw thread) 44 formed on the inner peripheral surface of the nut member 34. The screws employed in the present invention may be any of various types of ordinary screws other than ball screws, such as trapezoidal screws, triangular screws and square screws. The instant embodiment will be described hereinbelow in relation to the case where trapezoidal screws (screw threads) are employed.

One end portion 49 of the output rod 46 projecting outwardly through a wall portion of the actuator case 31, and a U-shaped groove 55 for connection thereto of the arm 26 (Fig. 1) is formed in a distal end region 54 of the one end portion 49. Further, the one end portion 49 of the output rod 46 is supported by a first bearing 48 provided on the actuator case 31, while another end portion 52 of the output rod 46 opposite from the one end portion 49 with the trapezoidal male screw 45 disposed therebetween is supported by a second bearing 53 provided on the nut member 34. An opening which is formed in the wall portion of the actuator case 31 and through which the one end portion 49 projects is sealed with a seal 51 formed of synthetic rubber.

The output rod 46, having the trapezoidal male screw 45 formed on a substantial axially-middle region of the output rod 46 between the one and other end portions 49 and 52, is a multi-step shaft structure where the outer diameter of the trapezoidal male screw 45 is smaller than the outer diameter of the one end portion 49 and where the outer diameter of the other end portion 52 is smaller than the outer diameter of the trapezoidal male screw 45.

A radial gap c1 is formed between the one end portion 49 of the output rod 46 and the first bearing 48, and another radial gap c2 is formed between the other end portion 52 of the output rod 46 and the second bearing 53.

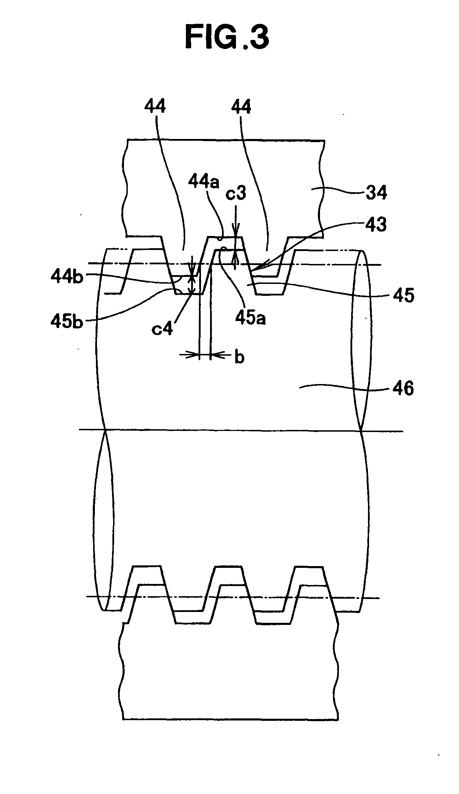

As schematically shown in Fig. 3, the trapezoidal male screw 45 formed on the output rod 46 and the trapezoidal female screw 44 formed on the nut member 34 have teeth each having a trapezoidal sectional shape. The trapezoidal female screw 44 and the trapezoidal male screw 45 are constructed and disposed to form: a backlash b that is a gap, in the axial direction, between the trapezoidal female screw 44 and the trapezoidal male screw 45; a top clearance c3 that is a radial gap between a bottom land 44a of the trapezoidal female screw 44 and a top land 45a of the trapezoidal male screw 45; and a top clearance c4 between a top land 44b of the trapezoidal female screw 44 and a bottom land 45b of the trapezoidal male screw 45.

The radial gaps c1 and c2 shown in Fig. 2 are set such that the backlash b and the top clearances c3 and c4 are secured even when the output rod 46 radially deviates or inclines into contact with at least one of the first bearing 48 and the second bearing 53.

The following describe behavior of the actuator 30 constructed in the aforementioned manner. As shown in Figs. 1 and 4, the output rod 46 is prevented by the arm 26 from rotating about its axis, and thus, as the motor 32 is driven to rotate the nut member 34 via the reduction gear group 33, the rotational motion of the nut member 34 is converted into linear axial motion of the output rod 46. As the output rod 46 moves in the axial direction like this, the arm 26 axially moves together with the output rod 46 so that the movable sheave member 21 moves toward the fixed sheave member 15. As a consequence, the distance between the fixed sheave member 15 and the movable sheave member 21, and hence the winding diameter of the V-belt 22, varies.

Namely, as the output rod 46 moves rightward, the distance between the fixed sheave member 15 and the movable sheave member 21 increases, so that the winding diameter of the V-belt 22 decreases, as shown in Fig. 1. On the other hand, as the output rod 46 moves leftward, the distance between the fixed sheave member 15 and the movable sheave member 21 decreases, so that the winding diameter of the V-belt 22 increases, as shown in Fig. 4.

In the illustrated embodiment, where the feed screw mechanism 43 between the output rod 46 and the nut member 34 comprises the trapezoidal screws (screw threads), the output rod 46 tends to incline relative to the axis of the nut member 34 due to the clearances between the trapezoidal male screw 45 and the trapezoidal female screw 44 of the feed screw mechanism 43.

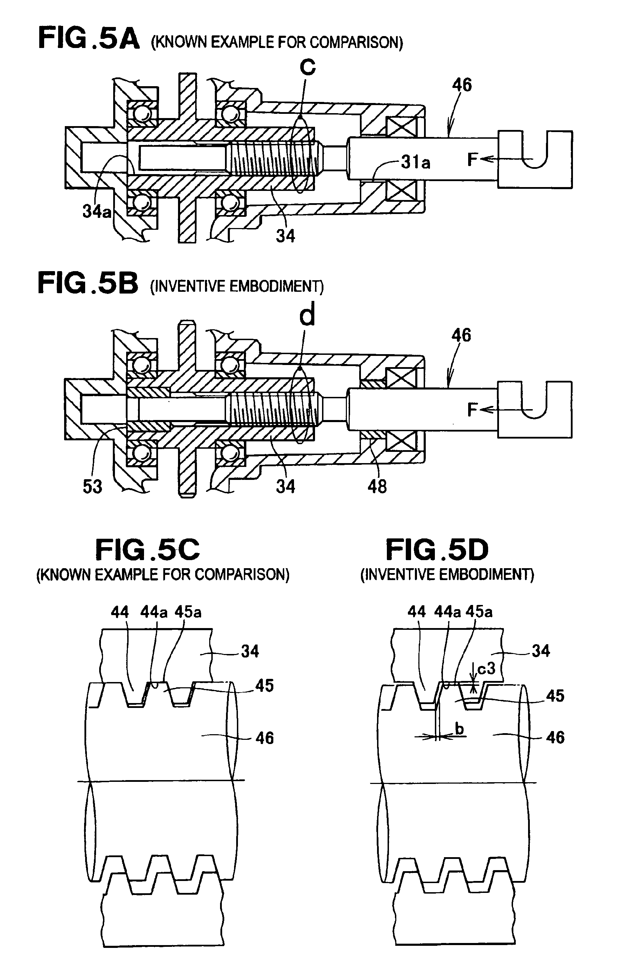

Influences of such inclination of the output rod 46 relative to the axis of the nut member 34 will be discussed hereinbelow with reference to Figs. 5A to 5D.

Fig. 5A shows a known example for comparison, which is generally similar to the illustrated example of Fig. 2 except that this known example is not provided with the first bearing 48 and second bearing 53. In the known example of Fig. 5A, the output rod 46 is supported only by threaded engagement with the nut member 34.

In this case, if the output rod 46 inclines relative to the axis of the nut member 34, i.e. if the output rod 46 inclines in a radial direction into contact with at least one of an inner surface portion 31a of the actuator case 31 and an inner surface portion 34a of the nut member 34, the top land 45a of the trapezoidal male screw 45 abuts against the bottom land 44a of the trapezoidal female thread 44 so that the top clearance c3 shown in Fig. 3 becomes zero or the backlash b shown in Fig. 3 becomes zero. If external force F is applied to the output rod 46 in such situations, the output rod 46 would radially incline relative to the axis of the nut member 34 and thus there would occur unwanted tight, inclined pressing (and possibly clinging or locking) between the screws, so that operation of the output rod 46 would become unsmooth. Fig. 5C shows the output rod 46 having inclined radially upward.

Fig. 5B shows the instant embodiment ("inventive embodiment"), where the output rod 46 is not only held in threaded engagement with the nut member 34 but also supported by the first bearing 48 and second bearing 53.

In the inventive embodiment, the output rod 46 is supported by the first bearing 48 and second bearing 53, and the radial gaps c1 and c2, top clearance c3 and backlash b shown in Fig. 3 are secured. Thus, as shown in Fig. 5D that is a fragmentary enlarged view of a section encircled at d in Fig. 5B, the clearances between the trapezoidal male screw 45 and the trapezoidal female screw 44 can be secured although the top clearance c3 and backlash b decrease. As a consequence, even when external force F is applied to the output rod 46, it is possible to reliably prevent unwanted tight, inclined pressing (clinging or locking) between the screws 45 and 44, so that smooth operation of the output rod 46 is always permitted. Fig. 5D shows the output rod 46 having inclined radially upward.

The first bearing 48 and the second bearing 53 are preferably slide bearings although they may be needle bearings in some cases. Note, however, that the slide bearings are more recommendable in terms of the load bearing capability and cost.

It should be appreciated that the screws employed in the present invention may be any of trapezoidal, triangular and square screws. However, if the triangular screws are employed, power consumption of the motor 32 would undesirably increase because the triangular screws have a small lead and thus the necessary rotationally-driven amount of the nut member 34 increases.

Further, the square screws can have an increased lead. But, if such square screws are employed, the output rod 46 is likely to easily swing relative to the nut member 34 during operation, because the flank of each of the square screws lies perpendicularly to the axis of the square screw.

Further, the trapezoidal screws can have an increased lead, and the flank of each of the trapezoidal screws lie obliquely relative to the axis of the screw. Thus, if the feed screw mechanism 43 comprises such trapezoidal screws, the output rod 46 is less likely to swing relative to the nut member 34 during operation, so that the output rod 46 can operate more smoothly. For these reasons, the trapezoidal screws are highly recommendable.

The basic principles of the present invention are well suited for application to continuously variable transmissions mounted on scooter-type vehicles.

## Claims

1. A V-belt continuously variable transmission including a fixed sheave member (15) fixedly mounted on a pulley shaft (12), a movable sheave member (21) axially movably mounted on the pulley shaft, a V-belt (22) wound between the fixed and movable sheave members (15, 21), and an actuator (30) for axially moving the movable sheave member (21) along the pulley shaft (12) toward or away from the fixed sheave member (15),
wherein the actuator (30) comprises:
a motor (32) as a drive source;
a nut member (34) having a female screw (44) formed thereon and rotationally drivable by the motor (32);
an output rod (46) having a male screw (45) formed thereon and meshing with the female screw (44) of the nut member (34), the output rod (46) axially moving in response to rotation of the nut member (34) to thereby axially move the movable sheave member (21) connected to one end portion (49) thereof;
an actuator case (31) accommodating and rotatably supporting the nut member (34) and a part of the output rod (46), the one end portion (49) of the output rod (46) extending through a wall portion of the actuator case (31) outwardly of the actuator case (31); and
a first bearing (48) disposed on the actuator case (31) or the nut member (34) for supporting the one end portion (49) of the output rod (46) while allowing axial movement of the output rod (46);
**characterized in that** the actuator (30) further comprises a second bearing (53) disposed on the actuator case (31) or the nut member (34) for supporting another end portion (52) of the output rod (46), opposite from the one end portion (49), while allowing axial movement of the output rod (46), with the male screw (45) disposed between the one end portion (49) and the other end portion (52).

2. The V-belt continuously variable transmission according to claim 1, wherein the first and second bearings (48, 53) and the output rod (46) are disposed with radial gaps (c1,c2) formed therebetween, and the radial gaps (c1,c2) are set such that a backlash (b) and top clearances (c3, c4) are formed between the female screw (44) and the male screw (45) even when the output rod (46) inclines radially into contact with at least one of the first and second bearings (48, 53).

3. The V-belt continuously variable transmission according to claim 1 or 2, wherein the output rod (46) is designed such that the male screw (45) is smaller in outer diameter than the one end portion (49) of the output rod (46).

4. The V-belt continuously variable transmission according to claim 3, wherein the output rod (46) is designed such that the other end portion (52) is smaller in diameter than the male screw (45).

5. The V-belt continuously variable transmission according to any one of claims 1 to 4, wherein the first bearing (48) is disposed on the actuator case (31), and the second bearing (53) is disposed on the nut member (34).

6. The V-belt continuously variable transmission according to any one of claims 1 to 5, wherein the first and second bearings (48, 53) are slide bearings.

## Patentansprüche

1. Stufenlos einstellbares Keilriemengetriebe, umfassend ein festes Scheibenglied (15), das fest an einer Riemenscheibenwelle (12) angebracht ist, ein bewegliches Scheibenglied (21), das axial beweglich an der Riemenscheibenwelle angeordnet ist, einen Keilriemen (22), der zwischen dem festen und dem beweglichen Scheibenglied (15, 21) aufgelegt ist, und einen Aktor (30) zum axialen Bewegen des beweglichen Scheibenglieds (21) entlang der Riemenscheibenwelle (12) zu dem festen Scheibenglied (15) hin oder von diesem weg,
wobei der Aktor (30) umfasst:
einen Motor (32) als Antriebsquelle,
ein Mutterglied (34), das daran angeformt eine Schraubenmutter (44) aufweist und durch den Motor (32) drehend antreibbar ist,
eine Abtriebsstange (46), die daran angeformt eine Schraube (45) mit Außengewinde aufweist und mit der Schraubenmutter (44) des Mutterglieds (34) in Eingriff steht, wobei sich die Abtriebsstange (46) in Abhängigkeit von Drehung des Mutterglieds (34) axial bewegt, um dadurch das bewegliche Scheibenglied (21), das mit einem Endabschnitt (49) davon verbunden ist, axial zu bewegen,
ein Aktorgehäuse (31), welches das Mutterglied (34) und einen Teil der Abtriebsstange (46) aufnimmt und drehbar lagert, wobei sich der eine Endabschnitt (49) der Abtriebsstange (46) durch einen Wandabschnitt des Aktorgehäuses (31) aus dem Aktorgehäuse (31) hinaus erstreckt, und
ein erstes Lager (48), das an dem Aktorgehäuse (31) oder dem Mutterglied (34) angeordnet ist, zum Lagern des einen Endabschnitts (49) der Abtriebsstange (46), wobei es axiale Bewegung der Abtriebsstange (46) zulässt,
**dadurch gekennzeichnet, dass** der Aktor (30) ferner ein zweites Lager (53), das an dem Aktorgehäuse (31) oder dem Mutterglied (34) angeordnet ist, zum Lagern eines anderen Endabschnitts (52) der Abtriebsstange (46), der dem einen Endabschnitt (49) entgegengesetzt ist, wobei es axiale Bewegung der Abtriebsstange (46) zulässt, umfasst, wobei die Schraube (45) mit Außengewinde zwischen dem einen Endabschnitt (49) und dem anderen Endabschnitt (52) angeordnet ist.

2. Stufenlos einstellbares Keilriemengetriebe nach Anspruch 1, wobei das erste und das zweite Lager (48, 53) und die Abtriebsstange (46) mit radialen Zwischenräumen (c1, c2), die dazwischen ausgebildet sind, angeordnet sind, und die radialen Zwischenräume (c1, c2) derart ausgelegt sind, dass zwischen der Schraubenmutter (44) und der Schraube (45) mit Außengewinde ein Flankenspiel (b) und Scheitelspiele (c3, c4) gebildet werden, auch wenn die Abtriebsstange (46) radial in Kontakt mit mindestens einem aus der Gruppe umfassend das erste und das zweite Lager (48, 53) geneigt ist.

3. Stufenlos einstellbares Keilriemengetriebe nach Anspruch 1 oder 2, wobei die Abtriebsstange (46) derart ausgebildet ist, dass die Schraube (45) mit Außengewinde einen kleineren Außendurchmesser aufweist als der eine Endabschnitt (49) der Abtriebsstange (46).

4. Stufenlos einstellbares Keilriemengetriebe nach Anspruch 3, wobei die Abtriebsstange (46) derart ausgebildet ist, dass der andere Endabschnitt (52) einen kleineren Durchmesser als die Schraube (45) mit Außengewinde aufweist.

5. Stufenlos einstellbares Keilriemengetriebe nach einem beliebigen der Ansprüche 1 bis 4, wobei das erste Lager (48) an dem Aktorgehäuse (31) angeordnet ist und das zweite Lager (53) an dem Mutterglied (34) angeordnet ist.

6. Stufenlos einstellbares Keilriemengetriebe nach einem beliebigen der Ansprüche 1 bis 5, wobei das erste und das zweite Lager (48, 53) Gleitlager sind.

## Revendications

1. Transmission à variation continue à courroie trapézoïdale comprenant un élément de poulie fixe (15) monté de façon fixe sur un arbre de poulie (12), un élément de poulie mobile (21) monté de façon axialement mobile sur l'arbre de poulie, une courroie trapézoïdale (22) enroulée entre les éléments de poulie fixe et mobile (15, 21), et un dispositif d'actionnement (30) destiné à déplacer axialement l'élément de poulie mobile (21) le long de l'arbre de poulie (12) vers ou à l'écart de l'élément de poulie fixe (15),
dans laquelle le dispositif d'actionnement (30) comporte :
un moteur (32) comme source d'entraînement ;
un élément d'écrou (34) ayant une vis femelle (44) formée dessus et pouvant être entraînée en rotation par le moteur (32) ;
une tige de sortie (46) ayant une vis mâle (45) formée dessus et en prise avec la vis femelle (44) de l'élément d'écrou (34), la tige de sortie (46) se déplaçant axialement en réponse à une rotation de l'élément d'écrou (34) pour déplacer ainsi axialement l'élément de poulie mobile (21) relié à une première partie d'extrémité (49) de celle-ci ;
un carter de dispositif d'actionnement (31) recevant et supportant de façon rotative l'élément d'écrou (34) et une partie de la tige de sortie (46), la première partie d'extrémité (49) de la tige de sortie (46) s'étendant à travers une partie de paroi du carter de dispositif d'actionnement (31) à l'extérieur du carter de dispositif d'actionnement (31) ; et
un premier palier (48) disposé sur le carter de dispositif d'actionnement (31) ou l'élément d'écrou (34) pour supporter la première partie d'extrémité (49) de la tige de sortie (46) tout en permettant un mouvement axial de la tige de sortie (46) ;
**caractérisée en ce que** le dispositif d'actionnement (30) comporte en outre un deuxième palier (53) disposé sur le carter de dispositif d'actionnement (31) ou l'élément d'écrou (34) pour supporter une autre partie d'extrémité (52) de la tige de sortie (46), à l'opposé de la première partie d'extrémité (49), tout en permettant un mouvement axial de la tige de sortie (46), avec la vis mâle (45) disposée entre la première partie d'extrémité (49) et l'autre partie d'extrémité (52).

2. Transmission à variation continue à courroie trapézoïdale selon la revendication 1, dans laquelle les premier et deuxième paliers (48, 53) et la tige de sortie (46) sont disposés avec des espaces radiaux (c1, c2) formés entre eux, et les espaces radiaux (c1, c2) sont prévus de telle sorte qu'un jeu (b) et des dégagements supérieurs (c3, c4) sont formés entre la vis femelle (44) et la vis mâle (45) même lorsque la tige de sortie (46) s'incline radialement en contact avec au moins un des premier et deuxième paliers (48, 53).

3. Transmission à variation continue à courroie trapézoïdale selon la revendication 1 ou 2, dans laquelle la tige de sortie (46) est conçue de telle sorte que la vis mâle (45) est plus petite en diamètre extérieur que la première partie d'extrémité (49) de la tige de sortie (46).

4. Transmission à variation continue à courroie trapézoïdale selon la revendication 3, dans laquelle la tige de sortie (46) est conçue de telle sorte que l'autre partie d'extrémité (52) est plus petite en diamètre que la vis mâle (45).

5. Transmission à variation continue à courroie trapézoïdale selon l'une quelconque des revendications 1 à 4, dans laquelle le premier palier (48) est disposé sur le carter de dispositif d'actionnement (31), et le deuxième palier (53) est disposé sur l'élément d'écrou (34).

6. Transmission à variation continue à courroie trapézoïdale selon l'une quelconque des revendications 1 à 5, dans laquelle les premier et deuxième paliers (48, 53) sont des paliers lisses.
